# EUROPEAN PATENT APPLICATION

(11) **EP 4 653 582 A2**
(43) Date of publication of application: **26.11.2025**
(21) Application number: 25207955.3
(22) Date of filing: 11.10.2023
(51) Int. Cl.: C25B 9/19

(54) **MINERAL EXTRACTION PROCESS**

(62) Divisional of application: 23203090.8
(71) Applicant: Brineworks B.V., 1098 XH Amsterdam (NL)
(72) Inventor: SVEINSSON, Gudfinnur, 1098 XH Amsterdam (NL); PERRYMAN, Joseph Terry, 1098 XH Amsterdam (NL)
(74) Representative: Barker Brettell LLP

(57) **Abstract**

A process of mineral extraction, the process comprising the steps of: providing an incoming brine stream, wherein the incoming brine stream comprises sodium ions, potassium ions and magnesium ions; contacting a first sample of the incoming brine stream with hydroxide ions to precipitate magnesium hydroxide and form a magnesium-depleted liquor; subjecting a processed brine solution to electrodialysis to produce hydroxide ions, wherein the processed brine solution is obtained from the magnesium-depleted liquor, and wherein the electrodialysis is performed using a membrane-based electrolyser; and contacting the hydroxide ions produced by the electrodialysis with a second sample of the incoming brine stream. A mineral extraction apparatus configured to perform the process of mineral extraction.

## Description

### Field of the Invention

The present invention relates to a process for mineral extraction from brine, in particular from brine obtained from the desalination of seawater. The present invention also relates to a mineral extraction apparatus configured to perform the process for mineral extraction from brine.

### Background of the Invention

Seawater contains a variety of mineral components including cationic species such as sodium, magnesium, calcium, potassium, lithium, and anionic species such as sulfate, chloride and bromide.

Several minerals including sodium chloride, magnesium hydroxide, magnesium carbonate, calcium hydroxide, calcium carbonate, and potassium chloride have been commercially extracted from seawater.

The desalination of seawater produces brine that contains a higher concentration of mineral components than was present in the seawater. Such brine is typically discharged into the ocean and/or onto land with little or no treatment, resulting in high disposal costs for the desalination industry and negative impacts for the local natural environment, such as contamination of fresh ground water and depletion of dissolved oxygen for aquatic life.

The treatment of brine generated from the desalination of seawater provides an efficient route to isolate minerals due to the increased concentration of minerals in the brine.

This invention improves on state-of-the art technologies by altering the processing of the brine, resulting in a more simplified process to harvest ions (in mineral form), in particular alkaline earth metals (especially magnesium and optionally calcium), and optionally to capture CO₂ from air, with overall lower energy consumption than their collective alternative production methods.

Mahmud, N., et al.; Desalination 2022, 525, 115489 discloses the optimization of a desalination process. This document focusses on electrolysis using membrane-less electrolysers to avoid fouling and to enable higher current densities and, in particular, focusses on the optimisation of brine salinity, NaOH dose and temperature to remove maximum magnesium hydroxide prior to electrolysis.

The present invention has been devised with the foregoing in mind.

### Summary of the Invention

According to a first aspect the present invention provides a process of mineral extraction, the process comprising the steps of:
- providing an incoming brine stream, wherein the incoming brine stream comprises sodium ions, potassium ions and magnesium ions;
- contacting a first sample of the incoming brine stream with hydroxide ions to precipitate magnesium hydroxide and form a magnesium-depleted liquor;
- subjecting a processed brine solution to electrodialysis to produce hydroxide ions, wherein the processed brine solution is obtained from the magnesium-depleted liquor, and wherein the electrodialysis is performed using a membrane-based electrolyser; and
- contacting the hydroxide ions produced by the electrodialysis with a second sample of the incoming brine stream.

Preferably the incoming brine stream is obtained by the desalination of seawater (i.e. is seawater desalination waste brine).

The present invention provides an alternative use for seawater desalination waste brine that allows the discharge of seawater desalination waste brine into the ocean and/or onto land to be avoided, and thereby allowing high costs for the desalination industry and negative impacts for the local natural environment to be avoided.

Hydroxide ions produced by electrodialysis are used to increase the pH of seawater desalination waste brine entering the process. The process therefore allows for the recycling of hydroxide ions (e.g. in the form of a metal hydroxide, such as sodium hydroxide) generated by the electrodialysis of the processed brine solution, which includes ionic components from the incoming brine stream.

Therefore, the process of the invention can avoid needing to dispose of the hydroxide produced by electrodialysis.

Raising the pH of the incoming brine stream (or a sample thereof) causes the precipitation of magnesium hydroxide. Other state-of-the-art technologies that remove magnesium from the brine in the form of magnesium hydroxide use sodium hydroxide generated by the chlor-alkali process, requiring further energy and other resource.

The process of the invention can increase the efficiency of the precipitation of magnesium hydroxide from seawater brine. The process of the invention can reduce the energy consumption of traditional processes for the extraction of minerals from seawater.

The process of the invention can be used to efficiently produce a variety of valuable products from seawater brine. Revenues from the sale of these valuable products can be used to offset the cost of potable water. Such valuable products can be used in other processes, allowing the total greenhouse gas footprint of those products to be reduced.

The process can therefore help the desalination industry tackle two of its largest problems. Firstly, the process can reduce the cost of potable water by utilizing the revenue streams from the raw materials and increasing the total water recovery from seawater. Secondly, the process can reduce the amount of brine discharge from desalination plants, an activity that is currently harming coastal ecosystems on a large scale and in many cases incurs high waste disposal fees.

Preferably the incoming brine stream further comprises sulfate ions. The process may comprise (preferably after the precipitation of magnesium hydroxide) contacting a solution comprising sulfate ions (and optionally sodium ions and/or potassium ions) with a soluble calcium salt, such as calcium chloride. Preferably the soluble calcium salt is added in an amount necessary to make the calcium concentration in the solution substantially equal the sulfate concentration in the solution. The solution may be concentrated to remove water (by evaporation and/or sublimation) to precipitate calcium sulfate (gypsum).

Traditional means for extracting sulfates from brine include the extraction of Glauber's salt (hydrous sodium sulfate, Myers, C., & Nakagaki, T. (2021, March). Negative emissions using Mg sourced from desalination brine or natural evaporite deposits; Proceedings of the 15th Greenhouse Gas Control Technologies Conference; pp. 15-18). This requires a cooling step to precipitate the sulfates. However, the process of the invention can avoid a cooling step, reducing the energy consumption of the process and improving process efficiency.

Products of the process (e.g. hydroxide ions (e.g. hydroxide salts), magnesium hydroxide/oxide and/or calcium hydroxide/oxide) can be contacted with carbon dioxide to produce respective carbonate salts. Therefore, the process of the present invention can be used as a carbon capture technology.

The process may comprise (preferably after the precipitation of magnesium hydroxide and/or calcium hydroxide/sulfate) further concentration of a solution that comprises at least part of the sodium ions of the incoming brine stream (by evaporation and/or sublimation) to precipitate sodium chloride.

Preferably the process comprises forming the processed brine solution from precipitated NaCl. Some or all of the precipitated sodium chloride may be dissolved in water to prepare the processed brine solution, i.e. a synthetic brine. This allows for careful control of the concentration of sodium chloride in the processed brine solution, and therefore the concentration of sodium chloride subjected to electrodialysis.

Precipitating sodium chloride and dissolving this to prepare the processed brine solution can help to avoid magnesium ions and/or calcium ions from entering the electrolyser, which can prevent fouling in the electrolyser and can increase the durability of the electrolyser (or components thereof).

Furthermore, this provides the benefit that two of the products generated (NaOH and NaCl) can be used to optimise the production of up to three other products (i.e. Mg(OH)₂, Ca(OH)₂ and HCl, or derivatives thereof).

A relatively small portion of the precipitated sodium chloride may be used to prepare the processed brine solution as a relatively large amount of precipitated sodium chloride is produced by the process. The remainder of the sodium chloride may be sold.

The process may comprise (preferably after the precipitation of magnesium hydroxide, calcium hydroxide/sulfate and/or sodium chloride) further concentration (by evaporation and/or sublimation) to precipitate potassium chloride.

The process may comprise contacting the magnesium hydroxide with hydrochloric acid to produce magnesium chloride. The process may comprise subjecting the processed brine solution to electrodialysis to produce hydroxide ions and hydrochloric acid. The hydrochloric acid contacted with the magnesium hydroxide may be produced by the electrodialysis. The magnesium chloride may be subjected to molten salt electrolysis to produce magnesium and chlorine (Dow Process, as described in Treatise on Process Metallurgy, volume 3: Industrial Processes, 2014, Chapter 2.9 - Rare Earth, Titanium Group Metals, and Reactive Metals Production - pages 995-1069, especially at page 1057).

The process may comprise dehydrating the magnesium hydroxide (e.g. by heating the magnesium hydroxide) to produce magnesium oxide (magnesia), producing water as the major by-product. Any carbonate contaminants present may release carbon dioxide upon heating, which should be captured. The magnesia may be contacted with carbon dioxide to produce magnesium carbonate. This allows the process to be used for carbon capture.

The preparation of magnesium carbonate can also avoid the highly exothermic reaction of magnesium oxide with HCl at high temperature. The thermodynamics of this reaction are also more favourable for the carbon capture of magnesia than the production of magnesium chloride. The decomposition of magnesium hydroxide to magnesium oxide occurs at a lower temperature than the formation of and the decomposition of magnesium chloride to magnesium oxide, reducing the energy requirements of the process.

Where the incoming brine stream comprises calcium ions, the process may comprise (preferably after the precipitation of magnesium hydroxide) contacting a solution (e.g. the magnesium depleted liquor) with further hydroxide ions to precipitate calcium hydroxide. The further hydroxide contacted with the solution may be produced by the electrodialysis. The process may comprise dehydrating the calcium hydroxide to produce calcium oxide. The calcium oxide may be contacted with carbon dioxide to produce calcium carbonate. This allows the process to be used for carbon capture. The calcium oxide may additionally or alternatively be used for concrete and/or cement production, as a low carbon alternative to current materials.

The process may comprise contacting part of the hydroxide ions with carbon dioxide to produce carbonate ions. The hydroxide ions are preferably sodium hydroxide and/or potassium hydroxide. Thus, the carbonate ions are preferably sodium carbonate and/or potassium carbonate (e.g. potassium sodium carbonate).

For example, the process may be used to produce magnesium carbonate, gypsum salt, sodium chloride, and potassium chloride from brine (e.g. seawater desalination waste brine) while capturing carbon dioxide from the air.

The present invention provides a mineral extraction apparatus configured to perform the process of the invention. The apparatus comprises a tank for the alkalinisation of brine and the separation of magnesium hydroxide from the supernatant brine. The apparatus comprises an electrodialysis cell for forming hydroxide ions from brine. The apparatus comprises a means (e.g. a conduit) to transfer hydroxide ions generated in an electrodialysis cell to the alkalinisation tank. Separation may be achieved using a centrifuge and/or drum filter. Preferably the process does not use a filter press.

The apparatus may comprise a tank for the alkalinisation of brine and the separation of calcium hydroxide from the supernatant brine; this tank may be fluidly connected to the tank for separation of magnesium hydroxide. The apparatus may comprise a tank for mixing brine with a water soluble calcium salt, such as calcium chloride; a concentrator (e.g. evaporative concentrator); and a precipitation unit for separating gypsum from the supernatant brine. The apparatus may comprise a precipitation unit for sodium chloride. The apparatus may comprise a precipitation unit for potassium chloride. The apparatus may comprise a mixer configured to mix supernatant brine from the sodium chloride and/or potassium chloride precipitation units and/or precipitated sodium chloride with water (e.g. obtained from the concentrator, precipitation units and/or other water removed from products in the process. Separation may be achieved using a centrifuge and/or drum filter. Preferably the process does not use a filter press. Components of the apparatus are preferably interconnected, for example fluidly connected. Components of the apparatus may be fluidly connected using standard items of chemical processing equipment, such as conduits (e.g. pipes) and/or valves.

The present invention may reduce the number of filtration steps (especially ultrafiltration and/or nanofiltration steps) often implemented in traditional processes for the extraction of minerals from brine.

The present invention may use only 4 heated units, have minimal fluid recirculation requirements, potential for nearly complete elimination of CO₂ mineralization energy input.

The present invention can be implemented in a manner that reduces the amount of or avoids any liquid discharge, and may be referred to as a zero liquid discharge (ZLD) or minimal liquid discharge (MLD) process.

In order to achieve a ZLD or MLD process, the present invention may combine any residual brine stream or slurry(e.g. that is not potable or suitable for feeding the electrolyser) into the incoming brine stream and/or the magnesium-depleted liquor. Preferably the liquor from the precipitation of sodium chloride and/or potassium chloride is combined with the incoming brine stream and/or the magnesium-depleted liquor. This can increase the amount and/or concentration of sodium ions and/or potassium ions for subsequent steps, thereby increasing the sodium chloride and/or potassium chloride crystallisers. The amount and/or concentration of ions recirculated may peak initially, and then may reduce to a substantially constant value as the process establishes a steady state.

### Detailed Description of the Invention

The present invention can generate high value products from seawater brine, optionally in combination with other reagents such as calcium chloride.

### Incoming Brine Stream

The process of the invention may be described as cyclical in that a first sample of the incoming brine stream is contacted with hydroxide ions and is used to prepare the processed brine solution, and the processed brine solution is used to prepare hydroxide ions that are used to raise the pH of the second sample of the incoming brine stream, just as the pH of the first sample was raised. The second sample may proceed in the same manner as the first sample. The first sample may represent the brine that is used in a first cycle of the process, and second sample may represent the brine that is used in a second cycle of the process.

Preferably the incoming brine stream is produced by the desalination of seawater. In other words, the incoming brine stream is preferably seawater desalination waste brine. Preferably the incoming brine stream does not comprise desulfurization wastewater and/or hydrocarbon well water. Preferably the incoming brine stream is not seawater, and has a higher ionic concentration than seawater. The incoming brine stream may have been subjected to reverse osmosis. Preferably the process does not comprise using reverse osmosis. Preferably the incoming brine stream is a liquid. The process can be operated without preparing a solid (e.g. mud cake) waste from the incoming brine stream.

Seawater desalination waste brine may comprise magnesium ions, sodium ions, potassium ions, calcium ions, sulfate ions and chloride ions.

The concentration of magnesium ions in the incoming brine stream may be 0.5 g/L or more, such as 1.5 g/L or more, or 2.0 g/L or more, such as 2.5 g/L or more, for example 2.7 g/L or more. The concentration of magnesium ions may be 6 g/L or less, such as 5 g/L or less, or 4 g/L or less, such as 3.5 g/L or less, or 3.0 g/L or less, or 2.9 g/L or less. The concentration of magnesium ions may be from 0.5 g/L to 6 g/L, such as from 2.0 g/L to 4 g/L.

The concentration of sodium ions in the incoming brine stream may be 10 g/L or more, such as 15 g/L or more, or 20 g/L or more, such as 22 g/L or more, or 23 g/L or more, or 24 g/L or more. The concentration of sodium ions may be 40 g/L or less, such as 35 g/L or less, or 30 g/L or less, for example 28 g/L or less, or 26 g/L or less, such as 25 g/L or less. The concentration of sodium ions may be from 10 g/L to 40 g/L, such as from 20 g/L to 30 g/L.

The concentration of sulfate ions in the incoming brine stream may be 1.0 g/L or more, such as 2.0 g/L or more, or 4.0 g/L or more, such as 5.0 g/L or more. The concentration of sulfate ions may be 15 g/L or less, such as 10 g/L or less, or 7.0 g/L or less, such as 6.0 g/L or less, or 5.7 g/L or less. The concentration of sulfate ions may be from 1.0 g/L to 15 g/L, such as from 4.0 g/L to 7.0 g/L.

The concentration of potassium ions in the incoming brine stream may be 0.2 g/L or more, such as 0.4 g/L or more, or 0.6 g/L or more, for example 0.8 g/L or more, or 1.0 g/L or more. The concentration of potassium ions may be 5.0 g/L or less, such as 3.0 g/L or less, or 2.0 g/L or less, for example 1.5 g/L or less, for example 1.2 g/L or less. The concentration or potassium ions may be from 0.2 g/L to 5.0 g/L, for example from 0.6 g/L to 2.0 g/L.

The concentration of calcium ions in the incoming brine stream may be 0.1 g/L or more, such as 0.3 g/L or more, or 0.5 g/L or more, for example 0.7 g/L or more, or 0.8 g/L or more. The concentration of calcium ions may be 3.0 g/L or less, such as 2.5 g/L or less, or 2.0 g/L or less, or 1.5 g/L or less, for example 1.2 g/L or less, or 1.0 g/L or less, for example 0.9 g/L or less, or 0.85 g/L or less. The concentration of calcium ions may be from 0.1 g/L to 3.0 g/L, such as from 0.5 g/L to 1.5 g/L.

The concentration of chloride ions in the incoming brine stream may be 20 g/L or more, such as 30 g/L or more, or 35 g/L or more, such as 38 g/L or more. The concentration of chloride ions may be 60 g/L or less, such as 50 g/L or less, or 45 g/L or less, or 42 g/L or less. The concentration of chloride ions may be from 20 g/L to 60 g/L, such as from 35 g/L to 45 g/L.

The incoming brine stream may comprise one or more other ions, for example ions that are present in seawater. The incoming brine stream may comprise one or more (such as all) ions selected from the list consisting of: bicarbonate ions, strontium ions, bromide ions, borate ions, fluoride ions, silicate ions, nitrate ions, lithium ions, barium ions, phosphate ions, aluminium ions and iodide ions. Such ions may each independently be present at concentrations of 1.0 g/L or less, such as 0.5 g/L or less, or 0.3 g/L or less. Bicarbonate ions may be present at a concentration of from 0.001 g/L to 1.0 g/L, such as from 0.005 g/L to 0.3 g/L. Strontium ions may be present at a concentration of 0.1 g/L or less, such as from 0.0001 g/L to 0.1 g/L, such as 0.05 g/L or less, for example from 0.001 g/L to 0.05 g/L. Bromide ions may be present at a concentration of from 0.01 g/L to 1.0 g/L, such as from 0.05 g/L to 0.03 g/L. Borate ions may be present at a concentration of 0.2 g/L or less, such as from 0.0001 g/L to 0.3 g/L, or from 0.001 g/L to 0.2 g/L. Fluoride ions, silicate ions, iodide ions, nitrate ions, lithium ions, barium ions, phosphate ions and/or aluminium ions may each independently be present at a concentration of 0.1 g/L or less, such as 0.01 g/L or less, for example from 0.00001 g/L to 0.01 g/L.

The incoming brine stream may comprise:
- magnesium ions in a concentration of 0.5 g/L or more, such as from 0.5 g/L to 6 g/L, and sodium ions in a concentration of 10 g/L or more, such as from 10 g/L to 40 g/L, and potassium ions in a concentration of 0.2 g/L or more, such as from 0.2 g/L to 5.0 g/L, or
- magnesium ions in a concentration of 0.5 g/L or more, such as from 0.5 g/L to 6 g/L, and sodium ions in a concentration of 10 g/L or more, such as from 10 g/L to 40 g/L, and potassium ions in a concentration of 0.2 g/L or more, such as from 0.2 g/L to 5.0 g/L, and calcium ions in a concentration of 0.1 g/L or more, such as from 0.1 g/L to 3.0 g/L, or
- magnesium ions in a concentration of 0.5 g/L or more, such as from 0.5 g/L to 6 g/L, and sodium ions in a concentration of 10 g/L or more, such as from 10 g/L to 40 g/L, and potassium ions in a concentration of 0.2 g/L or more, such as from 0.2 g/L to 5.0 g/L, and sulfate ions in a concentration of 1.0 g/L or more, such as from 1.0 g/L to 15 g/L, or
- magnesium ions in a concentration of 0.5 g/L or more, such as from 0.5 g/L to 6 g/L, and sodium ions in a concentration of 10 g/L or more, such as from 10 g/L to 40 g/L, and potassium ions in a concentration of 0.2 g/L or more, such as from 0.2 g/L to 5.0 g/L, and calcium ions in a concentration of 0.1 g/L or more, such as from 0.1 g/L to 3.0 g/L, and sulfate ions in a concentration of 1.0 g/L or more, such as from 1.0 g/L to 15 g/L, and chloride ions in a concentration of 20 g/L or more, such as from 20 g/L to 60 g/L, or
- magnesium ions in a concentration of 0.5 g/L or more, such as from 0.5 g/L to 6 g/L, and sodium ions in a concentration of 10 g/L or more, such as from 10 g/L to 40 g/L, and potassium ions in a concentration of 0.2 g/L or more, such as from 0.2 g/L to 5.0 g/L, and calcium ions in a concentration of 0.1 g/L or more, such as from 0.1 g/L to 3.0 g/L, and sulfate ions in a concentration of 1.0 g/L or more, such as from 1.0 g/L to 15 g/L, and chloride ions in a concentration of 20 g/L or more, such as from 20 g/L to 60 g/L, and other ions selected from the list consisting of: bicarbonate ions, strontium ions, bromide ions, borate ions, fluoride ions, silicate ions, nitrate ions, lithium ions, barium ions, phosphate ions, aluminium ions and iodide ions, wherein each of the other ions is present at a concentration of 0.3 g/L or less.

### Precipitation of magnesium hydroxide

The precipitation of magnesium from brine as magnesium hydroxide is achieved by raising the pH of the brine. The process uses hydroxide ions produced by the electrodialysis cell to increase the pH of the seawater brine.

The preparation of magnesium salts (e.g. magnesium hydroxide and/or magnesium oxide) from brine has been described in the literature, for example: Journal of the Marine Biological Association 14(2), 1926, p441-446; Minerals Engineering 7(4), April 1994, Pages 511-517; and Desalination Volume 429, 1 March 2018, Pages 88-95.

The pH of the brine may be raised to 8 or higher, such as 8.5 or higher, preferably 9 or higher, or 9.5 or higher, for example 10 or higher. Magnesium hydroxide is known to precipitate particularly well at a pH of 9 or higher. To prevent the simultaneous precipitation of calcium hydroxide, preferably the pH is raised to 15 or lower, such as 14 or lower, or 13.5 or lower, preferably 13 or lower, such as 12.5 or lower, or 12 or lower, such as 11 or lower, or 10 or lower. The pH may be raised to from 8 to 15, such as from 8.5 to 14, preferably from 9 to 13, or from 8 to 10.

The incoming brine stream may contain carbonate ions. In this situation, raising the pH of the incoming brine stream may cause the precipitation of magnesium carbonate in addition to magnesium hydroxide. The incoming brine stream (e.g. one or more samples thereof) may be subjected to degassing prior to contact with the hydroxide ions. Degassing the incoming brine stream may involve one or more of: heating the incoming brine stream, sonicating the incoming brine stream, and acidifying the brine (e.g. with HCl) prior to contacting it with the hydroxide ions. Precipitated magnesium carbonate (with magnesium hydroxide) may be decomposed by heating to evolve carbon dioxide and convert the magnesium carbonate (and possibly the magnesium hydroxide) into magnesium oxide. Water generated in this process may be used to prepare the processed brine solution. Carbon dioxide generated in this process may be chemically re-captured using the methods described herein. Preferably a carbonate salt (e.g. sodium carbonate) is not added to the incoming brine stream and/or the magnesium-depleted liquor. Preferably the carbon of the magnesium carbonate come from atmospheric carbon dioxide and/or flue gas emissions (e.g. hydrocarbon flue gas emissions).

A batch of the magnesium depleted liquor preferably comprises substantially the same amount of calcium ions as the sample of the incoming brine stream. For example, the amount of calcium ions in the magnesium depleted liquor is preferably from 70% to 100% (e.g. from 80% to 100%, or from 90% to 100%, preferably from 95% to 100%, or from 98% to 100%, such as from 99% to 100% or 99.5% to 100%, for example from 99.8% to 100%) of the amount of calcium ions in the sample of the incoming brine stream, by moles. The processed brine solution is depleted in magnesium ions compared to the incoming brine stream. For example, the processed brine solution may have a magnesium ion concentration that is 20% or less, or 10% or less, such as 2% or less, or 1% or less, such as 0.1% or less of the magnesium ion concentration of the incoming brine stream, by moles. The concentration of magnesium ions in the processed brine solution may be 0.0001% or more (e.g. from 0.0001% to 20%), compared to the magnesium ion concentration of the incoming brine stream, such as 0.001% or more, or 0.01% or more, by moles.

### Calcium salt extraction - calcium hydroxide

Preferably the magnesium-depleted liquor comprises calcium ions. Alkalinisation of the magnesium-depleted liquor leads to the precipitation of calcium hydroxide. The pH of the magnesium-depleted liquor may be increased to a pH of 12.5 or higher, such as 13 or higher, or 13.5 or higher. Preferably the pH of the brine is raised to 16 or less, such as 15 or less, or 14 or less. The pH may be raised to from 12.5 to 16, for example to from 13 to 14.

The pH may be raised by addition of hydroxide ions (e.g. a hydroxide salt). As described in relation to the precipitation of magnesium hydroxide, the hydroxide ions used to effect the precipitation of calcium hydroxide may be generated by the electrodialysis step. A concentrator (e.g. evaporator) may be used to remove water from the hydroxide ion-containing stream to reduce its volume and increase its alkalinity, to facilitate achieving the high pH levels required for the precipitation of calcium hydroxide.

The preparation of calcium salts (e.g. calcium hydroxide and/or calcium oxide) from brine has been described in the literature, for example: Journal of the Marine Biological Association 14(2), 1926, p441-446.

### Calcium salt extraction - Gypsum

Seawater brine comprises sulfate ions. The magnesium-depleted liquor preferably comprises sulfate ions. The magnesium-depleted liquor can be combined with (e.g. mixed with) a soluble calcium salt (e.g. calcium chloride) to generate calcium sulfate (i.e. gypsum salt).

The soluble calcium salt (e.g. calcium chloride) may be used to increase the amount and/or concentration of calcium ions in the brine in order to increase the ratio of calcium ions to sulfate ions. Preferably the soluble calcium salt (e.g. calcium chloride) is added in an amount to make the concentration of calcium ions in the solution substantially equal the concentration of sulfate ions in the solution.

The process may comprise a step of determining the sulfate and/or calcium concentration of the brine before adding calcium chloride. Preferably the amount of calcium chloride may raise the molar proportion of calcium ions (in relation to sulfate ions) to be 20% or more, or 50% or more, such as 80% or more, or 95% or more. Preferably the amount of calcium chloride may raise the molar proportion of calcium ions (in relation to sulfate ions) to be 500% or less, such as 200% or less, or 150% or less, for instance 120% or less, or 110% or less. Preferably the amount of calcium chloride may raise the molar proportion of calcium ions (in relation to sulfate ions) to be from 10% to 500%, such as from 80% to 150%, or from 80% to 120%.

The amount of calcium ions (in the soluble calcium salt, e.g. calcium chloride) added may be 10 mol or more per cubic meter of seawater brine initially added to the process, such as 20 mol or more, preferably 30 mol or more, for example 32 mol or more. The amount may be 100 mol or less, such as 60 mol or less, or 50 mol or less, preferably 40mol or less, such as 37 mol or less. The amount may be from 10 mol to 100 mol, such as from 30 mol to 40 mol.

The precipitation of gypsum from brine has been described in South African Journal of Chemical Engineering Volume 43, January 2023, Pages 104-111; and Maximizing conversion of CO2 and waste brine into construction materials December 2021, Conference: The First Symposium on Carbon Ultimate Utilization Technologies for the Global Environment (CUUTE-1), Nara (Japan).

### Precipitation

Minerals may be selectively extracted from the solution by controlling the removal of water from the solution, leading to the precipitation (e.g. crystallisation) of minerals. Preferably the process of the invention does not use ion exchange resins to extract ions (e.g. non-sodium and/or non-chlorine ions, such as magnesium ions and/or calcium ions) from brine solutions. The present invention can therefore avoid large amounts of resin being required and potentially wasted.

Minerals with low solubility will precipitate first, followed by other minerals in the order of their solubility in the solution. Gypsum is moderately water soluble (2-2.5 g/L at 25 °C). NaCl and KCl are both very water soluble (each around 360 g/L at 25 °C). As temperature is increased, the solubility of KCl increases faster than the solubility of NaCl. Furthermore, seawater desalination waste brine has a significantly higher concentration of sodium ions, compared to potassium ions, and is further increased by the addition of hydroxide ions typically in the form of sodium hydroxide. Therefore, at a temperature of around 70 °C NaCl reaches saturation and preferentially crystallises before KCl.

The concentration of each liquor (e.g. to induce precipitation) may be effected by an evaporator, a precipitation unit/crystalliser, and/or a (hydrophilic) membrane-based concentrator (Water Research, Volume 187, 15 December 2020, 116428). The evaporator may be a thermal evaporator.

Therefore, water may be removed by evaporation. One or more evaporative concentrators may be used to remove water. The evaporation step may be performed at a temperature of 50 °C or more, such as 60 °C or more, or 65 °C or more, such as about 70 °C. The temperature may be 120 °C or less, such as 100 °C or less, or 90 °C or less, preferably 80 °C or less, for example 75 °C or less, or about 70 °C. The temperature may be from 50 °C to 120 °C, such as from 60 °C to 90 °C.

Water may be removed under reduced pressure, such as at a pressure of 0.5 bar or lower, or 0.2 bar or lower, such as 0.1 bar or lower, or 0.07 bar or lower, or about 0.05 bar. The pressure may be from 0.001 bar to 0.5 bar, such as from 0.01 bar to 0.1 bar. Water may be removed at a temperature of 50 °C or more, such as from 50 °C to 120 °C, and a pressure of 0.5 bar or lower, such as from 0.001 bar to 0.5 bar.

A (first) precipitation unit may be used to precipitate gypsum. A (second) precipitation unit may be used to precipitate NaCl. A (third) precipitation unit may be used to precipitate KCl. Preferably there is a separate evaporator for each precipitation step (e.g. each of gypsum, NaCl and KCl). Small traces of potassium chloride and sodium chloride are expected in the effluent stream of the second and third crystallizers. Preferably each precipitation unit operates at a temperature of about 70 °C and/or a pressure of about 0.05 bar.

Separated (e.g. distilled) water in steps of the process may be used to dissolve (and optionally dilute) the precipitated NaCl in order to produce the processed brine solution. It will be understood that water is usually removed in any furnaces, crystallisers and evaporative concentrators that the process has.

The precipitation of chloride salts from seawater brine has been described in the literature: Ind. Eng. Chem. Res. 2017, 56, 36, 10183-10192; 2nd International Conference on Negative CO2 Emissions, June 14-17, 2022, Göteborg, Sweden, Demonstration of brine-based atmospheric CO₂ removal; Negative emissions using Mg sourced from desalination brine or natural evaporite deposits (March 25, 2021), Proceedings of the 15th Greenhouse Gas Control Technologies Conference 15-18 March 2021; and Desalination Volume 521, 1 January 2022, 115389.

### Electrodialysis

The processed brine solution is subjected to electrodialysis to produce hydroxide ions using a membrane-based electrolyser. The processed brine solution will comprise one or more ionic component of the incoming brine stream, and will therefore comprise one or more ionic component of the magnesium depleted liquor. The processed brine solution preferably comprises at least some of the sodium ions and/or potassium ions of the incoming brine stream (e.g. the first sample thereof). Magnesium hydroxide is precipitated from any incoming brine stream before being subjected to electrodialysis.

The processed brine stream may be the magnesium-depleted liquor. Preferably the processed brine stream does not have the same composition as the magnesium-depleted liquor. The magnesium depleted liquor may have been processed before forming the processed brine stream.

The concentration of magnesium ions in the processed brine solution may be 50 mg/L or less, such as 10 mg/L or less, or 1 mg/L or less, for example 0.1 mg/L or less, or 0.01 mg/L or less. The concentration of calcium ions in the processed brine solution may be 50 mg/L or less, such as 10 mg/L or less, or 1 mg/L or less, for example 0.1 mg/L or less, or 0.01 mg/L or less.

The processed brine solution is depleted in magnesium ions compared to the incoming brine stream. For example, the processed brine solution may have a magnesium ion concentration that is 20% or less, or 10% or less, such as 2% or less, or 1% or less, such as 0.1% or less of the magnesium ion concentration of the incoming brine stream, by moles. The concentration of magnesium ions in the processed brine solution may be 0.0001% or more (e.g. from 0.0001% to 20%), compared to the magnesium ion concentration of the incoming brine stream, such as 0.001% or more, or 0.01% or more, by moles.

The processed brine solution is depleted in calcium ions compared to the incoming brine stream. For example, the processed brine solution may have a calcium ion concentration that is 20% or less, or 10% or less, such as 2% or less, or 1% or less, such as 0.1% or less of the calcium ion concentration of the incoming brine stream, by moles. The concentration of calcium ions in the processed brine solution may be 0.0001% or more (e.g. from 0.0001% to 20%), compared to the calcium ion concentration of the incoming brine stream, such as 0.001% or more, or 0.01% or more, by moles.

The processed brine solution may have a chloride ion concentration of 0.01 wt% or more, such as 0.1 wt% or more, or 0.5 wt% or more, such as 1.0 wt% or more. The processed brine solution may have a chloride ion concentration of 3.0 wt% or less (e.g. from 0.01 to 3.0 wt%), such as 2.9 wt% or less, or 2.5 wt% or less (e.g. from 1.0 to 2.5 wt%). The processed brine solution may have a chloride ion concentration of 3.05 wt% or more, such as 3.1 wt% or more, or 3.2 wt% or more, or 3.5 wt% or more. The chloride ion concentration may be 22 wt% or less (e.g. from 0.01 wt% to 22.0 wt%, or from 3.05 to 22.0 wt%), such as 21.8 wt% or less, or 21.5 wt% or less, or 21.0 wt% or less (e.g. from 0.01 wt% to 21.0 wt%, or from 3.05 to 21.0 wt%).

Traditional membranes for electrodialysis have a poly(styrene) sulfonic acid copolymer as the cation-exchange membrane and a poly(vinyl) benzyl trimethyl ammonium hydroxide copolymer as the anion-exchange membrane.

The membrane-based electrolyser may comprise a cation-exchange membrane and an anion-exchange membrane. The membrane-based electrolyser may comprise a cation-exchange membrane that is a sulfonic acid-functionalised polyethylene (co)polymer, or a derivative thereof (e.g. Nafion (sulfonated tetrafluoroethylene copolymer)). Sulfonic acid functionalization is important for ion transport. The membrane-based electrolyser may comprise an anion-exchange membrane that is a piperidinium-, alkylammonium-, and/or imidazolium-functionalised (co)polymer. Preferably the membrane-based electrolyser comprises a sulfonic acid-functionalised polyethylene (co)polymer, or a derivative thereof, and a piperidinium-, alkylammonium-, and/or imidazolium-functionalised (co)polymer (e.g. PiperION (poly(aryl) piperidinium)).

Electrodialysis may be performed at a temperature of 10 °C or higher, such as 15 °C or higher, or 20 °C or higher, such as 25 °C or higher. The temperature may be 90 °C or lower, such as 80 °C or lower, or 70 °C or lower, for example 60 °C or lower. The temperature may be from 10 to 90 °C, such as from 20 to 70 °C.

The hydroxide ions will be generated in solution in water, for example as a sodium and/or potassium hydroxide solution. Preferably the hydroxide ions are kept in solution, rather than precipitating (e.g. crystallising) the hydroxide ions from their generation in electrodialysis to their addition to the incoming brine stream. This can help to facilitate controlling the alkalinisation of the incoming brine stream and reduce energy consumption of the process.

Preferably the electrodialysis produces no, or only a trace amount, of chlorine. Preferably electrical energy required for the process (e.g. precipitation, concentration and/or electrodialysis) is obtained from a renewable energy source and/or a local energy network, for example rather than directly from hydrocarbon combustion.

Joule, Volume 7, Issue 4, 19 April 2023, Pages 765-781 describes hydrogen production with seawater-resilient bipolar membrane electrolysers. However, this document teaches away from the use of electrodialysis to prepare hydroxide ions.

Journal of Membrane Science, Volume 61, 1991, Pages 239-252 describes the purification of acids and bases but does not discuss the production of these from seawater brine and the reuse of the sodium hydroxide to alkalinise brine introduced to the process.

Ind. Eng. Chem. Res. 2002, 41, 3, 579-586 discusses the use of asymmetric bipolar membranes in acid-base electrodialysis, but does not specifically describe solutions to practicalities relating to combining processes for mineral extraction from seawater brine with electrodialysis, such as the reuse of hydroxide ions and/or specifically using precipitated sodium chloride to prepare a synthetic brine for electrodialysis.

Heliyon. 2018 Nov; 4(11): e00923 discusses the development of an electrolysis based system to continuously recover magnesium from seawater, but also does not specifically discuss the reuse of hydroxide ions and/or specifically using precipitated sodium chloride to prepare a synthetic brine for electrodialysis.

### Carbon Capture

A large problem for humanity over the coming decades will be to limit global warming by removing greenhouse gases such as carbon dioxide (CO₂) from the atmosphere and/or avoiding further emission of such gases into the atmosphere.

Carbon dioxide removal (CDR) technologies are being developed and brought to market, but face large problems. Most of them face financial sustainability issues as they solely rely on the price of carbon offset credits, which is their sole product for sale. Many of them also face measurability and negative externality problems that reduce their credibility.

In addition to increasing the efficiency of providing potable water, the present invention can enable the large-scale removal of CO₂ from the atmosphere and/or prevention of the emission of CO₂. This can be achieved by reacting the CO₂ (e.g. in the atmosphere) with derivatives such as hydroxide ions (e.g. metal hydroxides). This can generate high value products (carbonates).

Carbon capture using chemicals such as magnesium hydroxide has been described in the literature, for example in Advances in CO2 Capture, Sequestration, and Conversion, Chapter 12, pp 295-322; Negative emissions using Mg sourced from desalination brine or natural evaporite deposits (March 25, 2021), Proceedings of the 15th Greenhouse Gas Control Technologies Conference 15-18 March 2021; International Journal of Greenhouse Gas Control, Volume 31, December 2014, Pages 67-76; and Energy Fuels 2014, 28, 9, 5936-5941. The methods described in these papers may be used in the present invention. The present invention recognises that previously redundant waste products from desalination can be used to achieve useful carbon capture.

One or more solutions and/or slurries in the process may be reacted with CO₂ to absorb the CO₂ and form carbonate salts.

The Invention improves on the state of the art CDR technologies, by introducing a profitable process that removes CO₂ from ambient air in a permanent and highly measurable manner. This process may be transformative for the CDR industry.

The Invention makes it possible to economically scale up the removal of CO₂ from the atmosphere. The importance of this cannot be overstated as, in the long term, the economics of different CDR technologies will decide how much they can be scaled up. The present invention is economically viable due to harvesting high-value raw materials and increasing levels of potable water from reject brine, both of which are highly valuable and sold on commodity markets. The sales revenue from these materials makes it possible to economically scale up this technology, and thus the amount of CDR.

### Detailed Description of the Drawings

Embodiments of the present invention will now be described by way of example with reference to the accompanying drawings, in which:
**Figure 1** is a flow diagram showing an example of a process of the invention that uses a membrane electrodialysis cell and uses the NaOH/KOH generated to alkalinise the seawater brine;
**Figure 2** is a flow diagram showing an example of a process of the invention that primarily produces gypsum, magnesium and chlorine;
**Figure 3A** is a flow diagram showing an example of a process of the invention that primarily produces magnesium hydroxide, gypsum, NaCl, KCl and HCl;
**Figure 3B** is a flow diagram showing the process of Figure 3A annotated with process parameters;
**Figure 4** is a flow diagram showing an example of a process of the invention that primarily produces gypsum, magnesium, chlorine, NaCl and KCl;
**Figure 5A** is a flow diagram showing an example of a process of the invention that primarily produces magnesium carbonate, gypsum, NaCl and KCl;
**Figure 5B** is a flow diagram showing the process of Figure 5A annotated with process parameters;
**Figure 6** is a flow diagram showing an example of a process of the invention that primarily produces magnesium carbonate, calcium carbonate, NaCl, KCl and HCl;
**Figure 7** is a flow diagram showing an example of a process of the invention that primarily produces magnesium carbonate, sodium carbonate, gypsum, NaCl, KCl and HCl; and
**Figure 8** is a flow diagram showing an example of a process of the invention that primarily produces magnesium carbonate, gypsum, NaCl, KCl and HCl, and recirculates the brine from the KCl crystalliser into the alkalinisation tank.

The scope of the invention is defined by the claims.

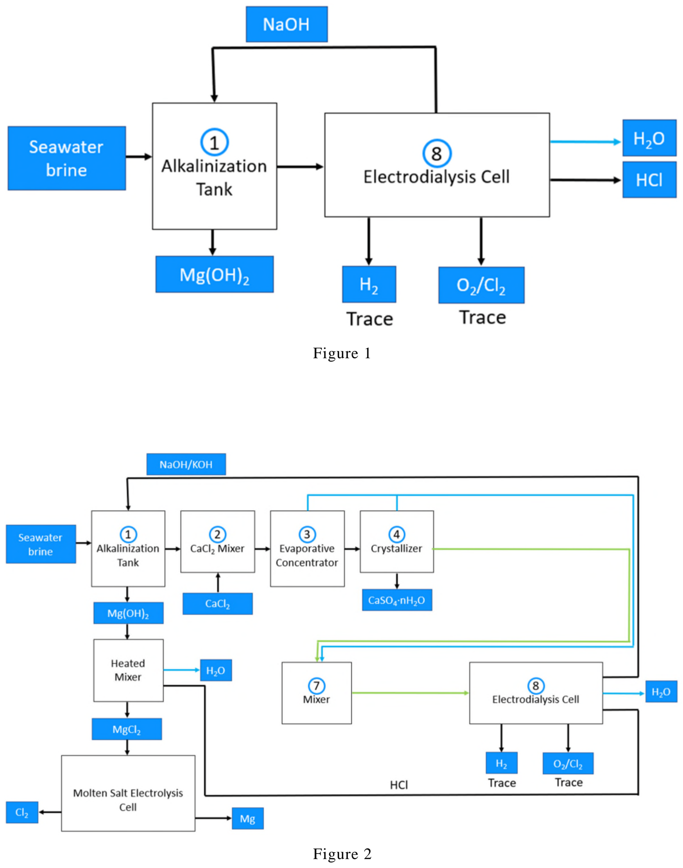

Figure 1 of the accompanying drawings shows a flow diagram for an example of the process of the invention. The flow diagram illustrates that seawater brine (discharge from a desalination plant) is charged into alkalinisation tank 1. The pH of the brine is increased to from 8 to 10 using sodium hydroxide. For the initial iteration of the process (until the electrodialysis cell is producing NaOH/KOH), external NaOH/KOH may be required to initiate the alkalinisation of the brine. Raising the pH above 9 causes magnesium hydroxide to precipitate at a significant rate. Alkalinisation tank 1 may facilitate the separation of magnesium hydroxide from the supernatant brine. Alkalinisation may occur at a temperature of from 0 °C to 25 °C - keeping the temperature within this range allows for an appreciable rate of precipitation whilst ensuring that a high proportion of the magnesium hydroxide does precipitate. The magnesium hydroxide can be used to make fire retardant and/or extinguishant, and/or for ocean alkalinisation.

The supernatant brine contains a significantly lower concentration of magnesium ions than in the original seawater brine. It also comprises sulfate ions, sodium ions, potassium ions and chloride ions. The supernatant brine may also comprise calcium ions.

The supernatant brine is charged into electrodialysis cell 8, where it is subjected to electrodialysis using an membrane-based electrolyser. The supernatant brine is split into separate HCl and NaOH/KOH streams. The some or all of the NaOH/KOH stream is charged to alkalinization tank 1 to raise the pH of further seawater brine and precipitate magnesium hydroxide. Traces of hydrogen, oxygen and/or chlorine may be produced in the electrodialysis apparatus. Water may also be generated and/or separated using the electrodialysis apparatus.

Figure 2 of the accompanying drawings shows an example of the process using the steps shown in Figure 1. In addition, the steps of the process shown in Figure 1, Figure 2 mixes the supernatant (magnesium depleted) brine from the alkalinisation tank with calcium chloride in CaCl₂ mixer 2. This raises the amount of calcium ions in the brine in order to form gypsum from the sulfate ions in the supernatant brine from alkalinisation tank 1. Evaporative concentrator 3 removes water from the resultant dispersion at a temperature of about 70 °C, and then the concentrated brine is passed to gypsum crystalliser 4 in order to facilitate the precipitation of gypsum. Gypsum crystalliser 4 also operates at about 70 °C. Water removed in evaporative concentrator 3 and/or crystalliser 4 is mixed (in mixer 7) with brine effluent from crystalliser 4 to control the concentration of the brine in electrodialysis cell 8. A benefit of this process is that it can be used to generate large amounts of NaOH/KOH and HCl. Another benefit of this process is that it has a relatively low energy consumption.

Figure 2 also shows the conversion of precipitated magnesium hydroxide into magnesium chloride by reaction of precipitated magnesium hydroxide with HCl generated in the electrodialysis cell. A further benefit of this process is that the waste of HCl from the process can be significantly reduced. The reaction is undertaken in a heated mixer, and water removed at this stage can be added into mixer 7 to control the concentration of the brine in electrodialysis cell 8, as described above. The MgCl₂ can be charged to a molten salt electrodialysis cell to electrolytically form chlorine and magnesium via the Dow Process.

The Pidgeon process is the most common process for producing magnesium in China, from which >85% of the world's metallic magnesium is sourced. The Pidgeon process performs thermal reduction of magnesium salts using high-carbon footprint precursors such as ferrosilicon, and has a carbon footprint of 37 kg CO₂ per kg of magnesium produced. By comparison, the electrolytic method of magnesium reduction used by some embodiments of the present invention has a carbon footprint of 6.9 kg CO₂ per kg of magnesium produced.

The process of the invention can produce around 3 kg of magnesium per cubic meter of brine. Using the process of the invention with electrolytic reduction of magnesium rather than the Pidgeon process allows around 90 kg of CO₂ emissions to be avoided per cubic meter of brine processed.

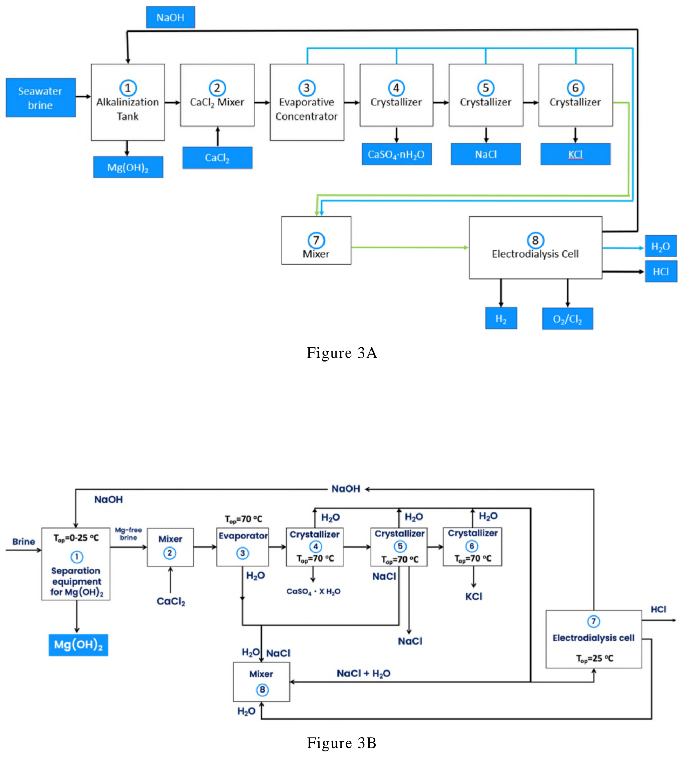

Figures 3A and 3B of the accompanying drawings shows an example of a process using similar steps shown in Figure 2 in relation to the production of gypsum, the electrodialysis and the reuse of NaOH/KOH. Figure 3B shows many process parameters of the steps shown in Figure 3A. As shown by Figure 3B, the operating temperature of alkalinisation tank 1 is 0-25 °C.

In contrast to the process shown in Figure 2, Figure 3 shows the brine effluent from gypsum crystalliser 4 being passed into NaCl crystalliser 5. Crystalliser 5 is operated at a temperature of about 70 °C and precipitates sodium chloride due to the increased solubility of KCl (relative to NaCl) at about 70 °C. The effluent from NaCl crystalliser 5 is passed into KCl crystalliser 6. Crystalliser 6 is operated at a temperature of about 70 °C and precipitates potassium chloride due to the sodium ions already having been precipitated as sodium chloride. Crystallisers 4, 5, 6 are arranged in series. The crystallisers do not remove all water as doing so may lead to the precipitation of impurities. The crystallisers may not remove all chloride salts from the brine. Therefore, the residual brine can be charged into mixer 7 for preparation for electrodialysis. Water (e.g. in the form of steam) removed from the brine in each of (i.e. any of or all of) the crystallisers may be condensed and mixed with the residual brine from crystalliser 6 and/or sodium chloride from crystalliser 5 in mixer 7, to control the concentration of the brine in the electrodialysis cell. Thus, the processed brine solution may comprise water from any or all of the crystallisers. It will be understood that a crystalliser does not necessarily have to produce crystals, and may be considered as a precipitation unit. Electrodialysis may be performed at a temperature of about 25 °C to 60 °C.

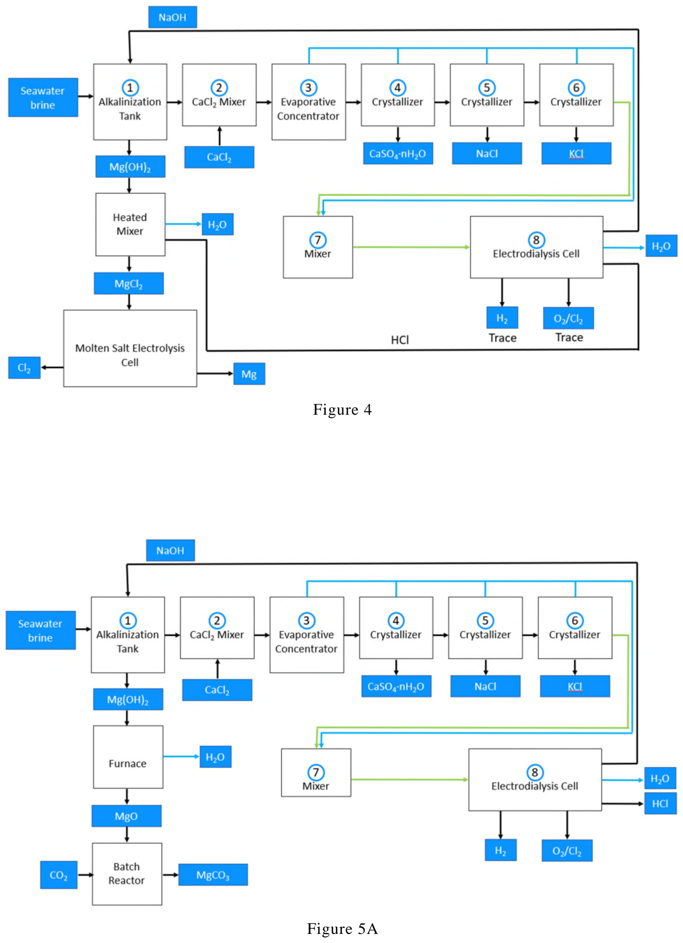

Figure 4 of the accompanying drawings shows an example of a process using similar steps shown in Figure 3, except that the magnesium hydroxide is converted into magnesium and chlorine, as shown in Figure 2.

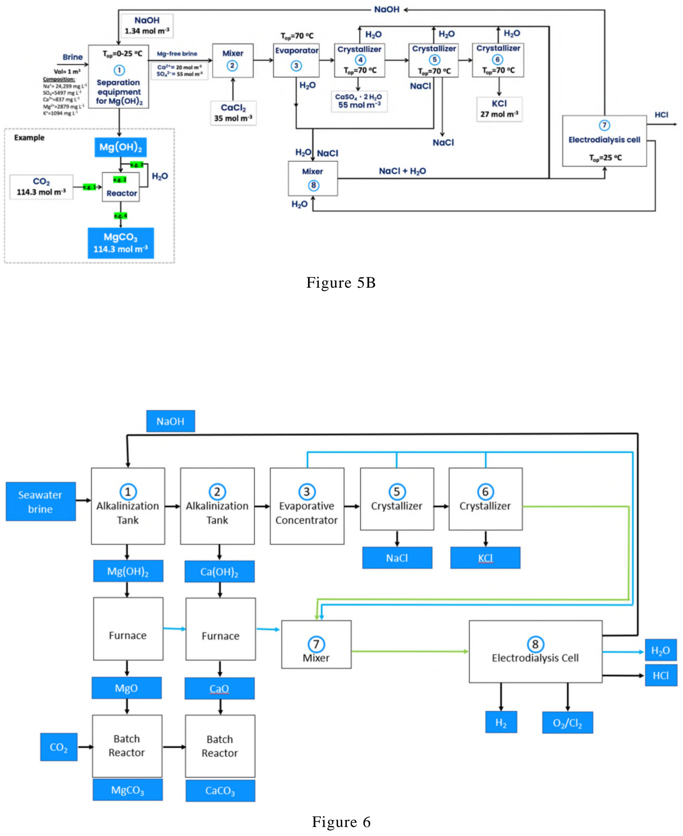

Figures 5A and 5B of the accompanying drawings shows an example of a process using similar steps shown in Figure 4. Figure 5B shows many process parameters of the steps shown in Figure 5A.

Figure 5 shows an example of a use for the precipitated magnesium hydroxide. Specifically, the magnesium hydroxide is heated in a furnace to remove water and produce magnesium oxide. The water may be used to control the concentration of brine in the electrodialysis cell. The magnesium oxide and/or magnesium hydroxide may be reacted with carbon dioxide to produce magnesium carbonate. This process may be used to capture carbon dioxide from the atmosphere or reduce flue emissions, for example.

Figure 5B shows representative but exemplary values for amounts of the reagents, concentrations and products per cubic meter of brine being inputted to the process. These values may depend on the precise implementation of the process and the precise composition of the input brine. The seawater brine has an ionic composition containing around 24,299 mg/L sodium, 5,497 mg/L sulfate, 2,879 mg/L magnesium, 1,094 mg/L potassium, and 837 mg/L calcium (Mahmud, N., et al.; Desalination 2022, 525, 115489). An amount of 1.34 mol of NaOH is charged to alkalinisation tank 1 in order to raise the pH of the brine to be from 8 to 13. This amount was calculated based on the known solubility constant of magnesium hydroxide: kₛₚ=5.61e-12 M³ (Solubility of Salts - Chemistry LibreTexts. URL:https://chem.libretexts.org/Courses/University_of_Arkansas_Little_Rock/Chem_ 1403%3A_General_Chemistry_2/Text/17%3A_Aqueous_Equilibria/17.04%3A__Solub ility_of_Salts, accessed 2021-03-14). The operating temperature (Tₒₚ) of alkalinisation tank 1 is 0-25 °C. The magnesium-depleted (e.g. magnesium free) effluent of alkalinisation tank 1 has an amount of calcium ions of 20 mol (per cubic meter of brine provided to the process), and a sulfate ion content of 55 mol. The calcium concentration is increased to substantially equal the concentration of sulfate by adding 35 moles of calcium chloride. Evaporator 3 is at a temperature of 70 °C. Gypsum crystalliser 4 operates at a temperature of 70 °C, and provides 55 mol of gypsum (CaSO4·2H2O). NaCl crystalliser 5 has an operating temperature of 70 °C. KCl crystalliser 5 has an operating temperature of 70 °C and precipitates 27 mol KCl. Water from the electrodialysis cell can be recirculated into mixer 8 to control the concentration of the brine in the electrodialysis cell. The magnesium hydroxide/magnesium oxide generated from 1 cubic meter of seawater brine may be used to capture 114.3 mol of carbon dioxide, and therefore to generate 114.3 mol of magnesium carbonate.

Figure 6 of the accompanying drawings shows an example of a process similar to that shown in Figure 5. Instead of adding calcium chloride to the brine, calcium is removed from the brine as calcium hydroxide by further alkalinisation of the brine. Therefore the brine effluent from alkalinisation tank 1 is transferred to alkalinisation tank 2 and further NaOH/KOH is added to increase the pH of the brine to 13 or above. This initiates precipitation of the calcium hydroxide. The calcium hydroxide can be heated in a furnace to remove water, forming calcium oxide. The calcium oxide can be reacted with carbon dioxide to produce calcium carbonate. This process may be used to capture carbon dioxide from the atmosphere or reduce flue emissions, for example. In this process, both the magnesium and the calcium from the brine are used to capture carbon dioxide. Water from the furnace may be used to control the concentration of the brine in the electrodialysis cell. The calcium-depleted effluent from alkalinisation tank 2 is concentrated in an evaporative concentrator 3, and then passed to crystallisers 5 and 6 to extract NaCl and KCl. This process requires more hydroxide to be produced, which would require more energy for electrodialysis, and would require a higher furnace energy, but allows for the capture of more carbon dioxide, avoids the use of calcium chloride, and avoids the energy required to crystallise the gypsum.

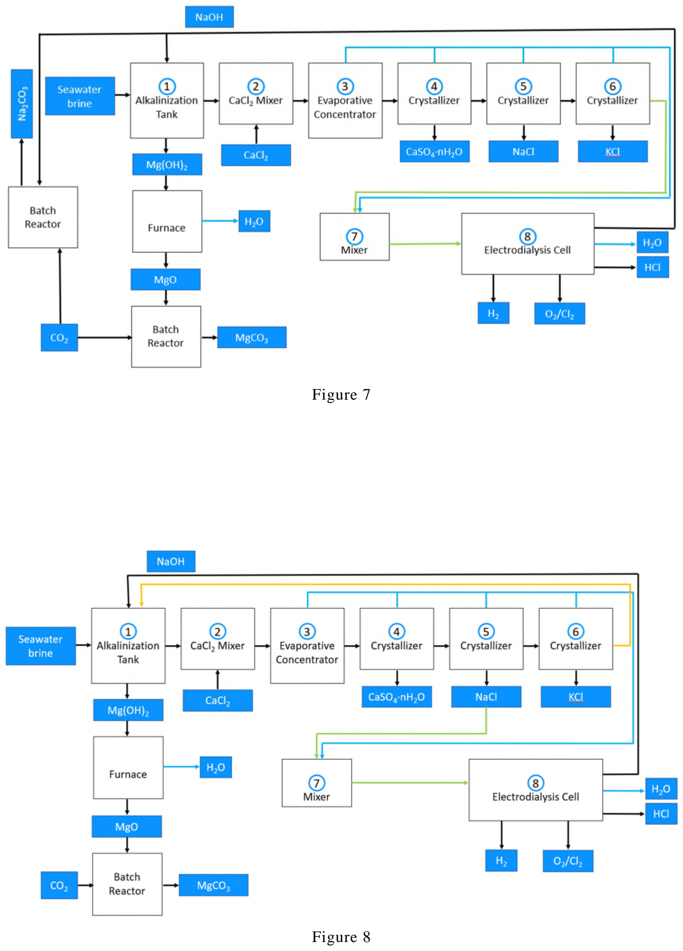

Figure 7 of the accompanying drawings shows an example of a process similar to that illustrated by Figure 5. The difference shown by Figure 7 is that excess NaOH is produced and reacted with carbon dioxide to form sodium carbonate. This process may be used alternatively or additionally to capture carbon dioxide from the atmosphere or reduce flue emissions, for example. In this process, both the magnesium from the brine and sodium hydroxide are used to capture carbon dioxide. It will be appreciated that carbon dioxide can be stored in the form of a metal carbonate, such as sodium, magnesium and/or calcium carbonate.

Figure 8 of the accompanying drawings illustrates an example of a process similar to that shown by Figure 5. One difference shown by Figure 8 is that the brine for the electrodialysis cell is prepared using precipitated sodium chloride and water removed from the concentrator and precipitation units. This provides a purer synthetic brine, with lower concentrations of calcium and/or magnesium, for electrodialysis, which avoids fouling of the membrane in the electrodialysis cell, and prolongs the life of the electrodialysis membrane. Another difference shown by Figure 8 is that the waste brine/slurry from the purification unit/crystalliser 6 is recycled into alkalinisation tank 1 to be re-extracted. This avoids having to dispose of the brine/slurry, and allows the ions present in that brine/slurry to be used to increase the ionic concentration in alkalinisation tank 1, improving the overall efficiency of the process.

## Claims

1. A process of mineral extraction, the process comprising the steps of:
- providing an incoming brine stream, wherein the incoming brine stream comprises sodium ions, potassium ions and magnesium ions;
- contacting a first sample of the incoming brine stream with hydroxide ions to precipitate magnesium hydroxide and form a magnesium-depleted liquor;
- subjecting a processed brine solution to electrodialysis to produce hydroxide ions, wherein the processed brine solution is obtained from the magnesium-depleted liquor, and wherein the electrodialysis is performed using a membrane-based electrolyser; and
- contacting the hydroxide ions produced by the electrodialysis with a second sample of the incoming brine stream.

2. The process of claim 1, wherein the incoming brine stream is seawater desalination waste brine.

3. The process of any preceding claim, wherein, after the precipitation of magnesium hydroxide, a solution obtained from the magnesium-depleted liquor is concentrated to precipitate sodium chloride.

4. The process of claim 3, wherein the processed brine solution is formed from the precipitated sodium chloride.

5. The process of any preceding claim, wherein contacting the incoming brine stream with hydroxide ions increases the pH of the resultant liquor to from 8 to 13 to precipitate magnesium hydroxide.

6. The process of any preceding claim, wherein the incoming brine stream and the magnesium-depleted liquor comprise sulfate ions, and the process comprises contacting the magnesium-depleted liquor, or a solution obtained from the magnesium-depleted liquor, with calcium chloride to produce gypsum.

7. The process of claim 6, wherein:
a) the liquor comprising gypsum is concentrated to precipitate gypsum;
b) the process comprises determining the sulfate and/or calcium concentration of the incoming brine stream and/or the magnesium-depleted liquor; and/or
c) the amount of calcium chloride raises the molar proportion of calcium ions in the liquor to from 80% to 120% in relation to sulfate ions in the liquor.

8. The process of any one of claims 1 to 5, wherein the incoming brine stream and the magnesium-depleted liquor comprise calcium ions, and the process comprises contacting the magnesium-depleted liquor, or a solution obtained from the magnesium-depleted liquor, with further hydroxide ions to precipitate calcium hydroxide.

9. The process of claim 8, wherein:
a) contacting the magnesium-depleted liquor, or the solution obtained from the magnesium-depleted liquor, with hydroxide ions increases the pH of the liquor to 13 or higher; and/or
b) the calcium hydroxide is dehydrated to produce calcium oxide.

10. The process of any preceding claim, wherein subjecting the processed brine solution to electrodialysis produces hydroxide ions and hydrochloric acid, and the process comprises contacting the magnesium hydroxide with the hydrochloric acid produced by electrodialysis to produce magnesium chloride.

11. The process of claim 10, wherein the process comprises subjecting the magnesium chloride to molten salt electrolysis to produce magnesium and chlorine.

12. The process of any preceding claim, wherein the magnesium hydroxide is dehydrated to produce magnesium oxide.

13. The process of claim 9b or any one of claims 10 to 12 as dependent upon claim 9b, wherein the process comprises contacting the calcium oxide with carbon dioxide to produce calcium carbonate; and/or the process of claim 11 or claim 12 as dependent upon claim 11, wherein the process comprises contacting the magnesium oxide with carbon dioxide to produce magnesium carbonate.

14. A mineral extraction apparatus configured to perform the process of any preceding claim, wherein the apparatus comprises:
- a tank for the alkalinisation of brine and for the separation of magnesium hydroxide from the magnesium-depleted liquor;
- an electrodialysis cell for forming hydroxide ions from brine, wherein the brine comprises sodium ions and/or potassium ions; and
- a means to transfer hydroxide ions generated in an electrodialysis cell to the alkalinisation tank.

15. The apparatus of claim 14, wherein the apparatus comprises:
(a) a tank for the alkalinisation of brine and the separation of calcium hydroxide from the supernatant liquor; and/or
(b) a mixer configured to mix supernatant brine from the sodium chloride and/or potassium chloride precipitation units and/or precipitated sodium chloride with water.
